# EUROPEAN PATENT SPECIFICATION

(11) **EP 0 962 130 B1**
(45) Date of publication and mention of the grant of the patent: **17.03.2004**
(21) Application number: 99202957.9
(22) Date of filing: 22.06.1994
(51) Int. Cl.: A01J 5/04, A01J 5/017, A01J 7/04

(54) **A construction for automatically milking animals**
Konstruktion zum automatischen Melken von Tieren
Installation de traite automatique d'animaux

(30) Priority: 24.06.1993 NL 9301098
(43) Date of publication of application: 08.12.1999
(62) Divisional of application: 94201790.6
(73) Proprietor: MAASLAND N.V., 3155 PD Maasland (NL)
(72) Inventor: Van Der Lely, Cornelis, 6300 Zug (CH)
(74) Representative: Corten, Maurice Jean F.M.

(56) References cited:
- EP-A- 0 209 206
- US-A- 4 010 714
- US-A- 4 941 433

## Description

The present invention relates to a construction for automatically milking animals, such as cows, according to the preamble of claim 1.

Such constructions are known, for example from the European patent application EP-A 0 277 396. It is the object of the invention to provide an alternative construction.

Therefore, according to the invention, the massaging device is vertically movable for massaging the udder by means of an up and down movement of the massaging device.

Massaging the udder stimulates the animal to relax the teats, so that, when a teat cup is connected, the milk starts flowing sooner. This enables a gain in time to be obtained for each animal to be milked.

According to another feature of the invention, the massaging device is fitted on a robot arm. According to a further feature of the invention, the robot arm is made up of a first part and a second part, with the foremilking device being fitted on the second part.

According to another feature of the invention, the second part of the robot arm is made up of a parallelogram/link gear, and on a first arm of this parallelogram/link gear there is provided a motor driving an eccentric disposed pivotably in a connecting member, whose other end is pivotably connected with a second arm of the parallelogram/link gear.

According to another feature of the invention, the first part as well as the second part of the robot arm is designed as a parallelogram/link gear. Owing to the fact that the first part of the robot arm is designed as a parallelogram/link gear, the height of the massaging device is adjustable in a simple manner.

According to a further embodiment of the invention, the first part of the robot arm comprises a motor driving an eccentric pivotably disposed in a connecting member, whose other end is pivotably connected with the second part of the robot arm.

According to another feature of the invention, the massaging device comprises a teat cup or a disc made of a flexible material. In the event that the massaging device is a flexible disc, according to a further feature of the invention, this disc is motor-driven to rotate about an upwardly directed shaft. The speed at which the disc is driven during operation is preferably 40 r.p.m.

According to a still another feature of the invention, the flexible disc is provided with at least one concentric groove on the upper side.

According to yet another feature of the invention, underneath the disc there is provided a cleaning device to clean one or more legs of the animal.

According to a further feature of the invention, this cleaning device is capable of being motor-driven to rotate about an axis directed upwardly. According to a further feature of the invention, the cleaning device comprises textile discs disposed on the axis directed upwards and the speed at which the cleaning device is preferably driven during operation is 40 r.p.m.

In another exemplary embodiment of the invention, the cleaning device comprises bristles disposed radially on the axis directed upwards.

In accordance with a feature of the invention, the two exemplary embodiments of the massaging device comprise means, with the help of which a cleaning and/or disinfecting fluid can be supplied to the massaging device. The massaging device as well as the teats and a part of the udder are cleaned by means of this cleaning and/or disinfecting fluid. According to a further feature of the invention, in either case the means comprise a supply line which is connected to the lower side of the massaging device. In the case where the disc is made of a flexible material, the means comprise a spray nozzle, according to a further feature of the invention. In the case where the teat cup finds application, according to still another feature of the invention, the cleaning and/or disinfecting fluid is supplied through the same line as through which milk, particularly foremilk, is drained off during (fore)milking.

According to yet another feature of the invention, the construction comprises two compartments and also a cleaning and/or massaging device which is rotatable about an axis directed upwards and which is capable of operating in the first compartment as well as in the second one.

According to another feature of the invention, the two compartments are situated side by side at a certain mutual distance, while in the interspace between the two compartments, a chassis movable in the longitudinal direction of the milking parlour is disposed, this chassis being connected with the cleaning and/or massaging device. According to still another feature of the invention, the construction comprises a first robot arm provided with teat cups and a second robot arm provided with a cleaning and/or massaging device, with the first and second robot arm being movable, from left to right alternately in a first compartment and in a second compartment. Thus, for instance, in the first compartment an animal can be cleaned and/or massaged, whilst in the second compartment an other animal can be milked at the same time. When the milking of the latter animal has been completed, the cluster is moved to the other compartment and the cow just cleaned and/or massaged is milked, while in the other compartment an other animal can take its place for subsequent cleaning and/or massaging. According to a further feature of the invention, the first robot arm is connected with a chassis movable in the longitudinal direction of the milking parlour.

According to still another exemplary embodiment of the invention, the construction comprises a single handling implement, by means of which the four teats can be treated successively.

According to another feature of the invention, the handling implement comprises a teat cup. On its upper side, the teat cup is, according to still another feature of the invention, provided with a flexible flange which, during operation, is at least partly in contact with the teat and also with a part of the underside of the udder. According to a feature of the invention, the flexible flange is provided with radially disposed canals, in which there is provided an arrangement for transmission of ultra-short waves to stimulate the blood flow. An appropriate blood circulation in the teats and udder is not only conducive to the health of the udder, but it also stimulates the animal to make the milk production take place faster.

The invention will now be further explained with reference to the accompanying drawings, in which:
Figure 1 is a plan view of a milking parlour comprising two compartments, where a milking robot and a cleaning device are pivotably disposed in between the two compartments;
Figure 2 is a side view of the milking parlour of Figure 1;
Figure 3 is a detailed side view of the cleaning device represented in Figures 1 and 2;
Figure 4 shows the order in which the animals in the compartments of the milking parlour of Figures 1 to 3 are milked and cleaned/massaged, respectively;
Figure 5 is a plan view of a second exemplary embodiment of the invention, showing a milking parlour made up of compartments with, arranged in between the two compartments, a pivotable sensor and a pivotable cleaning/massaging device;
Figure 6 is a cross-sectional side view of the cleaning/massaging device taken along the line VI-VI in Figure 5, and
Figure 7 is a plan view of the cleaning/massaging device according to Figure 6.

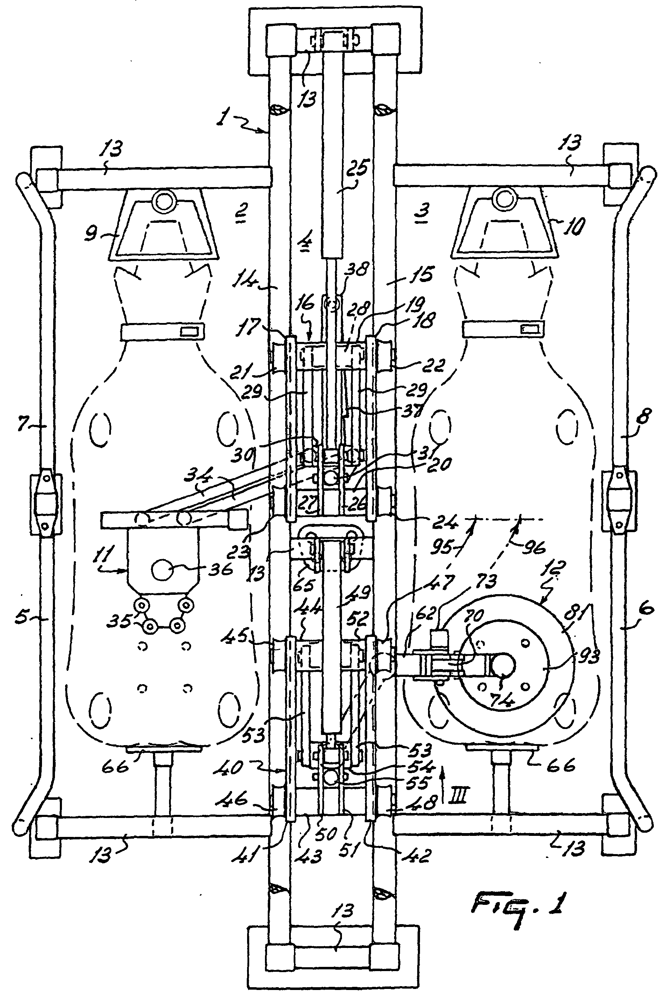

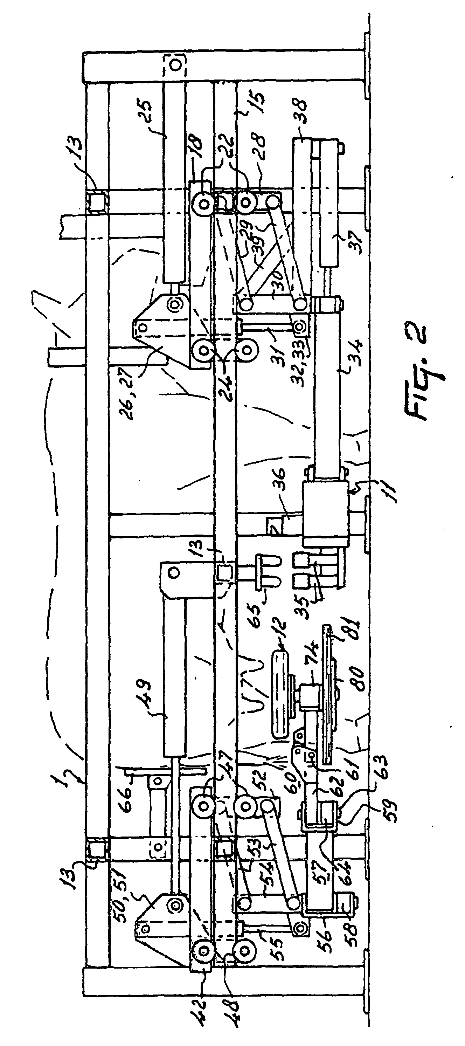

Figure 1 is a plan view of a twin milking parlour 1 comprising two compartments 2 and 3 situated side by side as well as an interspace 4 provided between these two compartments 2 and 3. The animals gain access to the compartments 2 and 3 through doors 5 and 6, respectively, while they are led out of these compartments through doors 7 and 8. In each of the compartments 2 and 3 there is provided an automatic feeding device, the feed troughs 9 and 10 of which are indicated in Figure 1. In a condition of rest, a milking robot 11 and a cleaning/massaging device 12 are in the interspace 4. In the exemplary embodiment shown, the milking robot 11 comprises a chassis 16 movable on two rails 14 and 15 which belong to the enclosure 13 of the two compartments 2 and 3. This chassis 16 is composed of transverse beams 19 and 20 interconnected by means of beams 17 and 18, with these transverse beams on either end being provided with pairs of rollers 21 to 24. Through these pairs of rollers, the chassis 16 can be moved longitudinally on the rails 14 and 15 between the two compartments 2 and 3. This movement is effected by means of an actuating cylinder 25 on one side attached to the front part of the enclosure 13, and, on the other side, fastened in between two plates 26 and 27 mounted at a certain mutual distance on the transverse beam 20. On the transverse beams 19 there are provided beams 28 extending downwards. Supporting beams 30 are connected to the beams 28 by means of a parallelogram link gear 29 operating in an essentially vertical plane. The supporting beams 30 can be moved up and down, parallel to the beams 28, by means of an actuating cylinder 31 disposed in between the plates 26 and 27 fastened to the upper transverse beams 20 and plates 32 and 33 fastened to a beam between the supporting beams 30 (Figure 2). On the lower side of the supporting beams 30 there is provided a robot arm construction 34 equipped with teat cups 35 and a sensor 36 to locate, with reference to the end of the robot arm construction 34 where the teat cups 35 are situated, the teats of an animal present in one of the compartments. The end of the robot arm construction 34 provided with the teat cups 35 is movable horizontally in the way as indicated hereinafter, whereas the robot arm construction 34 is movable vertically by means of the actuating cylinder 31. As is indicated in Figure 1, the robot arm construction 34 comprises a parallelogram link gear 29 which is pivotably connected with the supporting beams 30. Pivoting the parallelogram link gear 29 in a horizontal plane is done by means of an actuating cylinder 37 pivotably connected, on one end, to an arm of this parallelogram link gear 29, and on the other end, to a beam 38 mounted horizontally on the supporting beam 30. For strength, a strut 39 is mounted between the beam 38 and the transverse beams 20. Furthermore, one of the arms of the parallelogram link gear 29 comprises an actuating cylinder - although not depicted - which enables the end of the robot arm construction 34 to be rotated. Owing to the movement of the chassis 16 on the rails 14 and 15, the swivelling movement to be made by means of the parallelogram link gear 29 and the possibility to pivot the end of the robot arm construction 34, the teat cups 35 can be put into any position under the udder of an animal present in one of the compartments 2 or 3. The milking robot 11 has been designed such that the chassis 16 is capable of travelling on the front part of the rails 14 and 15, while further the parallelogram link gear 29 is directed rearwards such that the end of the robot arm construction 34 can swivel to a position between a fore leg and a hind leg, and subsequently be put under the udder of the animal, namely in a position being determined by means of the sensor 36, which is preferably a laser sensor.

As mentioned before, there is installed in the interspace 4 not only the milking robot 11, but also the cleaning/massaging device 12. In the depicted embodiment of the invention, the cleaning/massaging device 12 comprises a chassis 40 movable on the rails 14 and 15. This chassis 40 is made up of transverse beams 43 and 44 connected by means of beams 41 and 42, with the two ends of the transverse beams 43 and 44 being provided with roller pairs 45 - 48. The chassis 40 can be moved longitudinally on the rails 14 and 15 between the two compartments 2 and 3 by means of these roller pairs 45 - 48. This movement is effected by means of an actuating cylinder 49, one end of which, approximately in the centre of the interspace 4, is fastened to a transverse beam included in the enclosure 13 and fitted as such between the rails 14 and 15, and the other end of which is fastened through two plates 50 and 51 fitted at a certain distance from each other on the transverse beam 43. At the centre of the lower transverse beam 44 there are provided, in a rigid connection with the transverse beam 44, beams 52 extending downwards. Supporting beams 54 are connected with the lower ends of the beams 52 by means of a parallelogram link gear 53 acting in an essentially vertical plane. The supporting beams 54 can be moved up and down, parallel to the beams 52, by means of an actuating cylinder 55 mounted between plates 50 and 51 fastened to the upper transverse beam 43. Between the supporting beams 54, at their lower end, there is provided a U-section connecting piece 56, on which a robot arm construction 57 is pivotably mounted. The robot arm construction 57 is rotatable about an essentially vertical axis by means of a motor 58 also disposed on this U-shape connecting piece 56. The robot arm construction 57 is made up of a first part 59 which is connected with the U-shape connecting piece 56 and of a second part 60 which is connected with the end of the first part 59 of the robot arm construction by means of a horizontal pivot 61. On the end of the second part 60 of the robot arm construction, the cleaning/massaging device 12 is fitted. The first part 59 of the robot arm construction is also made up of two parts 62 which are pivotable with respect to each other about a vertical shaft 63. The two parts 62 can be pivoted with respect to each other about the vertical shaft by means of a motor mounted near the vertical shaft 63.

Near the centre of the twin milking parlour 1, a spraying plant 65 for rinsing and disinfecting the teat cups 35 is installed on the enclosure 13,

Furthermore, there are provided, close to the rear side of the compartments 2 and 3, positioning plates 66, by means of which the animal can be longitudinally positioned in the compartments 1 and 2.

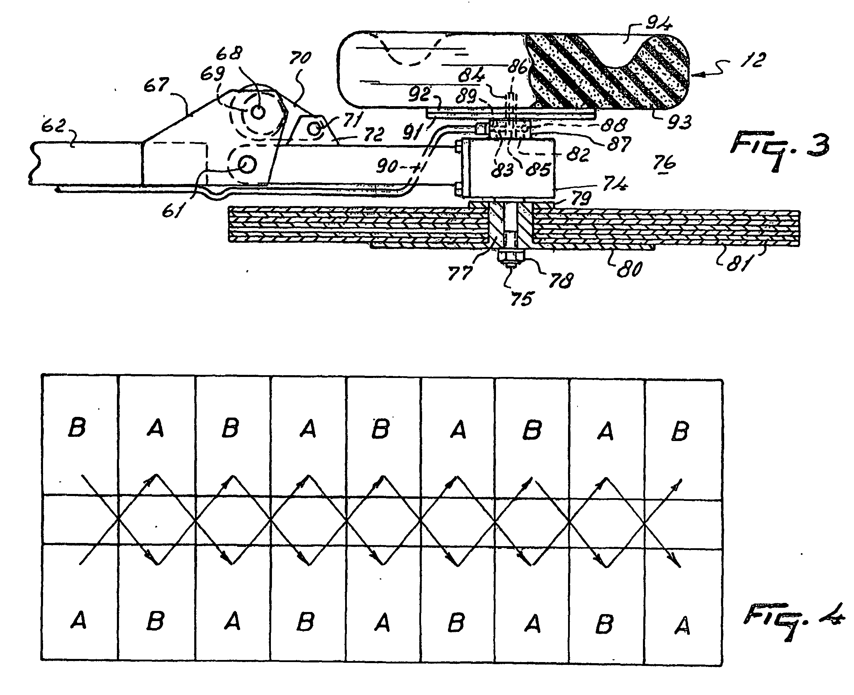

Figure 3 shows enlarged the cleaning/massaging device 12 of Figures 1 and 2. The part 62 belonging to the first part 59 of the robot arm construction 57 comprises, at its end, two lugs 67 bearing the horizontal pivot 61 of the second part 60 of the robot arm construction. Above the horizontal pivot 61, a second horizontal pivot 68, bearing-supported by lugs 67, is provided with an eccentric disc 69. The eccentric disc 69 is bearing-supported by a strip-type connecting member 70, of which one end is pivotably connected with a third horizontal pivot 71 which is connected with the second part 60 of the robot arm construction by means of lugs 72. The second horizontal pivot 68 is driven by a motor 73 which is fitted on the external side of one of the lugs 67. The motor 73 as well as the motors 58 and 64 may be hydraulic, pneumatic or electric ones.

A further drive motor 74, provided with a drive shaft 75 extending vertically, is installed at the end of the second part 60 of the robot arm construction. The drive shaft 75 extends from below the motor 74 to above the motor 74. A cleaning device 76 for cleaning the animal's legs is mounted on the stub of the drive shaft 75 at the lower side of the motor 74. The cleaning device 76 comprises a cylindrical bush 77 pushed over the stub and locked by means of a nut 78 provided on the lower end of the shaft stub. The upper side of the cylindrical bush 77 has a flange 79 of a diameter which roughly corresponds with the diameter of the drive motor 74. The lower side of the cylindrical bush 77 is provided with a flange 80 which has a diameter which is three times that of the first-mentioned flange 79. The flanges 79 and 80 clamp in position a plurality of textile discs 81 radially disposed and stacked. The textile discs 81 have a diameter which is approximately twice that of the lower flange 80. In an alternative embodiment which is not further detailed hereinafter, instead of the textile discs 81, bristles can be radially disposed on the cylindrical bush 77.

On the part of the shaft 75 rising above the motor 73, the cleaning/massaging device 12 is mounted. The shaft stub rising above the motor 73 comprises a first cylindrical part 82 provided with a recess 83 disposed radially in the cylindrical surface and at half the height of this cylindrical part 82. Above the first cylindrical part 82, there is provided a second cylindrical part 84 which has a diameter of about one third that of the first cylindrical part 82. At the height of the recess 83, the first cylindrical part 82 has a horizontal hole 85 which reaches to approximately the centre of the cylindrical part 82 and then connects with a vertical hole 86 provided on the longitudinal axis of the second cylindrical part 84.

Enclosing the first cylindrical part 82 and rigidly mounted on the housing of the drive motor 74 is a cylindrical ring 87 which is also provided with a recess 88 which connects with the recess 83 in the first cylindrical part 82. Furthermore, the cylindrical ring 87 is provided with a horizontal hole 89 which opens into the chamber formed by the recesses 83 and 88. Through a nipple, not shown, a supply line 90 for the supply of spraying and/or disinfecting liquid is connected to the horizontal hole 89. Also mounted on the first cylindrical part 82 is a flat concentric mounting disc 91 which is detachably connected with a further disc 92 slid on the second cylindrical part 84 and rigidly connected with a disc 93 made of foam rubber. The foam rubber disc 93 is about 10 cms thick and it has a diameter of about 40 cms. The first cylindrical part 82, which constitutes a spray nozzle, extends about 3 cms into the foam rubber disc 93. The diameter of the mounting disc 91 and the further disc 92 amounts to about half that of the foam rubber disc 93. The upper side of the foam rubber disc 93 is provided with a hollow surface profile 94 disposed concentrically at about two thirds of the radius, as seen from the centre, of the foam rubber disc 93. The hollow profile 94 is about 8 cms wide and about 4 cms deep. It will be obvious that, apart from foam rubber, any other soft flexible material may be utilized.

During operation, the cleaning/massaging device 12 is put under the udder of an animal by means of the robot arm construction 57. Positioning the cleaning/massaging device 12 will take place on account of data obtained through an animal identification system or on account of data gathered through a sensor. After the foam rubber disc 93 has been put under the udder, the motor 73 is put into operation, whereupon the eccentric disc 69 having a 1 mm eccentricity is driven. Through the strip-type connecting member 70, this causes the second part of the robot arm 60 to move up and down. The dimensions of the second part 60 of the robot arm construction have been chosen such that the massaging disc 93 has a stroke of 10 mms near the centre. During massaging and/or cleaning the udder, the further drive motor 74 is also put into operation. This drive motor 74 is preferably a reversible electric motor which runs at about 40 r.p.m. in operating condition. For an even more profound cleaning and/or massaging effect, in operating condition, it is also practicable to put the motors 58 and 64 into operation, so that the foam rubber disc 93 is also moved in a horizontal plane. During cleaning and/or massaging, a spray and/or disinfection liquid can be applied to the foam rubber disc 93 through the supply line 90.

Furthermore, it is feasible to clean the animal's legs by means of the robot arm construction 57 and the textile discs 81. To this end, the further drive motor 74 drives the textile discs 81, while the textile discs 81 are pressed against a leg of the animal and perform a reciprocating movement therealong by means of the robot arm construction 57. During leg cleaning, the motor 73 can also be energized, causing the textile discs 81 to move vibratingly up and down in the cleaning process. Cleaning the animal's legs in the above manner has the advantage that no udder/teat contamination takes place when the animal lies down to rest and, in doing so, a leg touches the udder and/or teats.

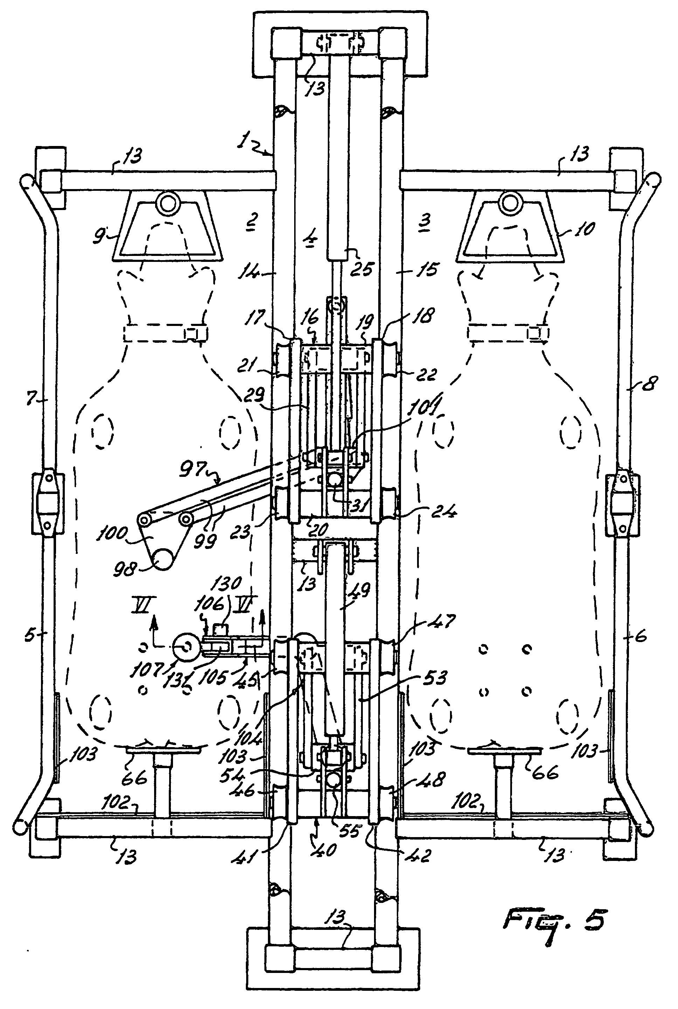

While an animal is being cleaned/massaged with the cleaning/massaging device 12 in one of the two compartments, it is possible at the same time to milk, with the milking robot 11, an other animal in the other compartment. After the milking robot 11 has milked the animal to be milked, the teat cups 35 are disconnected and the milking robot 11 is swung to the other compartment in accordance with the arrows 95 shown in Figure 1. The animal milked subsequently leaves the compartment through the door 7, while another animal is allowed to go through the door 5 and to take its place. The cleaning/massaging device 12 is then swung to the animal to be cleaned and/or massaged, in accordance with the arrow 96 shown in Figure 1. After this animal has also been cleaned and milked, the preceding process repeats itself. In Figure 4 it is indicated how the two compartments are occupied in terms of time and which actions take place in the respective compartments. Here, reference letter A denotes milking and reference letter B denotes cleaning and massaging. When it is taken for granted that the compartments are fully occupied for twenty-four hours and that the herd consists of hundred cows to be milked three times a day, about five minutes are available for each milking session.

Figure 5 represents a second exemplary embodiment of a twin milking parlour 1 wherein corresponding parts of Figures 1 and 2 are indicated by the same reference numerals. The twin milking parlour 1 shown in Figure 5 comprises a sensor 98 which can be swivelled with a square link gear 97. The square link gear 97 comprises two arms 99 hinged on one end on a carrying platform 100, on which the sensor 98 is placed. The other ends of the arms 99 are hinged on a beam 101 fitted on a chassis - not shown - which is identical to the chassis 16 of the first exemplary embodiment of the construction according to Figures 1 and 2. With this chassis it is possible to move the sensor 98 in the longitudinal direction of the twin milking parlour. With an actuating cylinder - not shown - it is also possible to swing the sensor 98 from one compartment to the other. The sensor 98 may be implemented as a laser sensor, an ultrasonic sensor or any other type of sensor.

In operating condition, the co-ordinates of the teats are determined by means of the sensor 98. For this purpose, the sensor is swung underneath the animal to a position before the udder, and the sensor transmits a signal towards the rear side of the compartment. When this signal hits the teats, it is reflected to a receiving element in the sensor 98. From the signal reflected, the positions of the teats can be derived.

Furthermore, the rear walls of the compartments are covered with shielding elements 102 which prevent that elements out of the compartments affect the detection process. The side walls, too, are provided with shielding elements 103 near the rear side of the compartments. Here, the shielding elements 103 abut on the shielding element 102 which is the rear wall. In the exemplary embodiment shown in Figure 5, the shielding elements 103 of the side walls of the compartments screen off about 1/5 of the overall length of a compartment. In addition, the shielding elements 102 as well as the shielding elements 103 are provided with a layer absorbing sensor rays.

In the twin milking parlour of Figure 5, there is also provided a robot arm construction 104 which partly corresponds with the robot arm construction 57 shown in Figures 1 and 2. In the same way as the robot arm construction 57, the robot arm construction 104 is, by means of a chassis, movable in the longitudinal direction of the twin milking parlour.

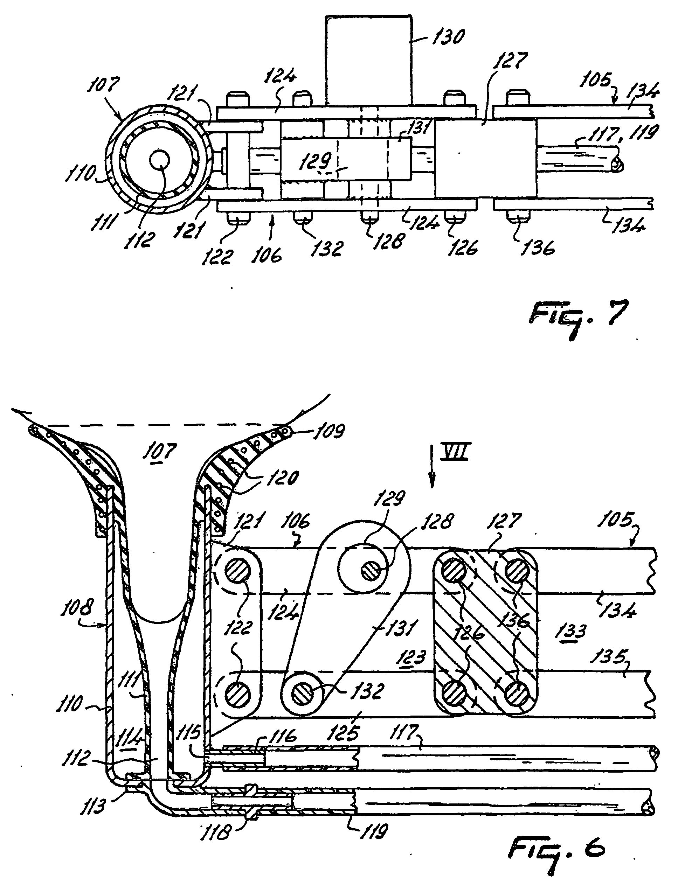

Also the first part 105 of the robot arm construction 104 is identical to the first part 59 of the robot arm construction in Figures 1 and 2. The second part 106 of the robot arm construction 104 is different from the second part 60 of the robot arm construction 57 in Figures 1 and 2, and hereinafter it will be further detailed with reference to Figures 6 and 7.

At the end of the second part 106 of the robot arm construction, there is provided a second exemplary embodiment of a cleaning/massaging device 107, which can also be utilized as a foremilking device. When milk is extracted with the foremilking device 107, it is automatically drained off to a tank - not shown - which, apart from the standard milk tank, is connected to the milk line system. It will be obvious that with the foremilking device 107 it is also possible to milk "normally" teat after teat. In Figure 6 it is shown that this cleaning/massaging device 107 comprises a teat cup 108 which is, on its upper side, provided with a flange 109 made of flexible rubber. The teat cup 108 comprises a cylindrical housing 110 accommodating a teat cup liner 111. Near the upper side of the teat cup 108, the teat cup liner 108 ends in the flexible flange 109, while, at least partly, the flexible flange 109 is firmly clamped round the cylindrical housing by means of an annular flange lip. The teat cup liner 111 projects through a hole 112 provided near the lower side of the cylindrical housing 110. The teat cup liner 111 is fixed in position in the hole 112 by means of a further flange 113. The space between the teat cup liner 111 and the inner wall surface of the cylindrical housing 110 forms a chamber 114, which connects to an air suction and pressure line 117 through a hole 115 provided in the cylindrical housing 110 and through a nipple 116 fitted in this hole. A milk/water line 119 is connected to the lower part of the teat cup liner 111 through a connector 118. By applying water, or a cleaning/disinfection liquid, to the teat cup through this line 119 and by forcing the liquid to flow between a teat and the teat cup liner 111 including the flexible flange, the teat and a part of the udder is cleaned/massaged and, if necessary, disinfected.

The flexible flange 113 is furthermore provided with a plurality of canals 120 disposed radially and accommodating transmitting elements - not shown - for transmission of ultra-short waves. Through these ultra-short waves, the flow of blood in the teat and in at least a part of the udder is stimulated. As shown in Figure 7, in the longitudinal direction of the cylindrical housing 110 there are provided two strips 121 at a certain distance from each other. Pivots 122 provided near the upper end and the lower end of these strips 121 constitute, on one side, the axes of rotation of a parallelogram/link gear 123. The parallelogram/link gear 123 comprises a first pair of arms 124 pivotably connected with the upper pivot 122, and a second pair of arms 125 connected with the lower pivot 122. The other ends of the first and the second pairs of arms 124 and 125 are pivotably connected to a block 127 by means of pivots 126.

A shaft 128 bearing-supported near the centre of the first pair of arms 125 is provided with an eccentric disc 129. The shaft 128 constitutes the drive shaft of an electric motor 130 mounted on one of the arms 124. The (eccentric) disc 129, disposed about 3 mms off the centre of the shaft 128, is bearing-supported in a connecting link 131, whose other end is pivotably connected with a shaft 132 passing through the second pair of arms 125. When the electric motor 130 is energized, the eccentric causes the teat cup 108 to move about 10 mms up and down, which produces a certain massaging/stimulating effect. The block 127 is also connected with a further parallelogram/link gear 133 which also comprises a first pair of arms 134 and a second pair of arms 135. The first and second pair of arms 134 and 135 are pivotably connected to the block 127 by means of shafts 136. The second parallelogram/link gear 133 enables the teat cup 108 to be moved up and down by means of an actuating cylinder - not shown - and consequently, to achieve an adjustment in height.

## Claims

1. A construction for automatically milking animals, such as cows, with a milking parlour (1) and a milking robot (11) and comprising a massaging device (12, 107) for massaging an animal's udder, **characterized in that** the massaging device (12, 107) is vertically movable for massaging the udder by means of an up and down movement of the massaging device (12, 107).

2. A construction according to claim 1, **characterized in that** the massaging device (12, 107) is disposed on a robot arm (34, 104).

3. A construction according to claim 2, **characterized in that** the robot arm (34, 104) is made up of a first part (105) and a second part (106), whereby the foremilking device (12, 107) is mounted on the second part (106).

4. A construction according to claim 3, **characterized in that** the second part (106) of the robot arm (34, 104) is constituted by a parallelogram/link gear (123).

5. A construction according to claim 4, **characterized in that** mounted on a first arm (124) of the parallelogram/link gear (123), a motor (130) drives an eccentric (129) which is pivotably fitted in a connecting member (131), whose other end is pivotably connected with a second arm (125) of the parallelogram/link gear (123).

6. A construction according to any one of claims 3 to 5, **characterized in that** the first part (105) as well as the second part (106) of the robot arm (104) is implemented as a parallelogram/link gear.

7. A construction according to claim 3, **characterized in that** mounted on the first part of the robot arm (34, 104), a motor (73) drives an eccentric (69) which is pivotably fitted in a connecting member (70), whose other end is pivotably connected with the second part of the robot arm (34).

8. A construction according to any one of the preceding claims, **characterized in that** the massaging device (107) comprises a teat cup (108).

9. A construction according to any one of claims 1 to 7, **characterized in that** the massaging device (12) comprises a disc (93) made of a flexible material.

10. A construction according to claim 9, **characterized in that** the flexible disc (93) is motor-driven to rotate about an upwardly directed shaft (75).

11. A construction according to claim 9 or 10, **characterized in that** at least one groove (94) is provided on the upper side of the disc (93).

12. A construction according to any one of claims 9 to 11, **characterized in that** a cleaning device (76) for cleaning one or several legs of the animal is disposed under the disc (93).

13. A construction according to claim 12, **characterized in that** the cleaning device (76) is motor-driven to rotate about an upwardly directed shaft (75).

14. A construction according to claim 13, **characterized in that** the cleaning device comprises textile discs (81) provided on an upwardly directed shaft (75).

15. A construction according to claim 13, **characterized in that** the cleaning device (76) comprises bristles arranged radially on the upwardly directed shaft (75).

16. A construction according to any one of the preceding claims, **characterized in that** the massaging device (76) comprises means, with the help of which a cleaning and/or disinfecting fluid can be supplied to the massaging device (12).

17. A construction according to claim 16, **characterized in that** the means comprise a supply line (90) connected to the lower side of the massaging device (12).

18. A construction according to claim 16 or 17, **characterized in that** the means comprise a spray nozzle (86).

19. A construction according to any one of the preceding claims, **characterized in that** it comprises two compartments (2, 3) as well as a cleaning and/or massaging device which is rotatable about an upwardly directed shaft (75) and which is capable of operating in either parlour compartment.

20. A construction according to claim 19, **characterized in that** the two compartments (2, 3) are situated side by side at a certain distance from each other, while in the interspace (4) between the two compartments (2, 3), a chassis (40) movable in the longitudinal direction of the milking parlour (1) is placed, to which chassis the cleaning and/or massaging device is connected.

21. A construction according to claim 19 or 20, **characterized in that** it comprises a first robot arm (34) provided with teat cups (35) and a second robot arm (57) provided with a cleaning and/or massaging device (12), with the first and second robot arm being movable, from left to right, in alternately a first compartment (2) and a second compartment (3).

22. A construction according to claim 21, **characterized in that** the first robot arm (34) is connected with a chassis (16) movable in the longitudinal direction of the milking parlour (1).

23. A construction according to any one of the preceding claims, **characterized in that** it comprises a single handling implement, by means of which the four teats can be treated successively.

24. A construction according to claim 23, **characterized in that** the handling implement comprises a teat cup (108).

25. A construction according to claim 24, **characterized in that**, on its upper end, the teat cup (108) is provided with a flexible flange (109) which, during operation, is at least partly in contact with the teat and also with a part of the underside of the udder.

26. A construction according to claim 25, **characterized in that** the flexible flange (109) is provided with canals (120) disposed radially.

27. A construction according to claim 26, **characterized in that** the canals (120) comprise an arrangement for transmission of ultra-short waves to stimulate the blood flow.

28. A construction according to any one of the preceding claims, **characterized in that** it comprises a separate foremilking device (107), which functions such that the milk gained by means of the foremilking device does not come into contact with the milk obtained for human consumption.

## Patentansprüche

1. Vorrichtung zum automatischen Melken von Tieren, wie z. B. Kühen, mit einem Melkstand (1) und einem Melkroboter (11), die eine Massagevorrichtung (12, 107) zum Massieren eines Tiereuters umfaßt,
**dadurch gekennzeichnet, daß** die Massagevorrichtung (12, 107) in vertikaler Richtung bewegbar ist, um das Euter mittels einer Auf- und Abwärtsbewegung der Massagevorrichtung (12, 107) zu massieren.

2. Vorrichtung nach Anspruch 1,
**dadurch gekennzeichnet, daß** die Massagevorrichtung (12, 107) an einem Roboterarm (34, 104) angeordnet ist.

3. Vorrichtung nach Anspruch 2,
**dadurch gekennzeichnet, daß** der Roboterarm (34, 104) aus einem ersten Teil (105) und einem zweiten Teil (106) besteht, wobei die Vormelkvorrichtung (12, 107) an dem zweiten Teil (106) angebracht ist.

4. Vorrichtung nach Anspruch 3,
**dadurch gekennzeichnet, daß** der zweite Teil (106) des Roboterarmes (34, 104) durch ein Parallelogrammgestänge (123) gebildet ist.

5. Vorrichtung nach Anspruch 4,
**dadurch gekennzeichnet, daß** an einem ersten Arm (124) des Parallelogrammgestänges (123) ein Motor (130) angebracht ist, der einen Exzenter (129) antreibt, welcher schwenkbar an einem Verbindungsglied (131) angebracht ist, dessen anderes Ende schwenkbar mit einem zweiten Arm (125) des Parallelogrammgestänges (123) verbunden ist.

6. Vorrichtung nach einem der Ansprüche 3 bis 5,
**dadurch gekennzeichnet, daß** der erste Teil (105) sowie der zweite Teil (106) des Roboterarmes (104) als Parallelogrammgestänge ausgeführt sind.

7. Vorrichtung nach Anspruch 3,
**dadurch gekennzeichnet, daß** an dem ersten Teil des Roboterarmes (34, 104) ein Motor (73) angebracht ist, der einen Exzenter (69) antreibt, welcher schwenkbar an einem Verbindungsglied (70) angebracht ist, dessen anderes Ende schwenkbar mit dem zweiten Teil des Roboterarmes (34) verbunden ist.

8. Vorrichtung nach einem der vorhergehenden Ansprüche,
**dadurch gekennzeichnet, daß** die Massagevorrichtung (107) einen Zitzenbecher (108) umfaßt.

9. Vorrichtung nach einem der Ansprüche 1 bis 7,
**dadurch gekennzeichnet, daß** die Massagevorrichtung (12) eine Scheibe (93) aus einem elastischen Material umfaßt.

10. Vorrichtung nach Anspruch 9,
**dadurch gekennzeichnet, daß** die elastische Scheibe (93) zur Drehung um eine aufwärts gerichtete Achse (75) motorisch angetrieben ist.

11. Vorrichtung nach Anspruch 9 oder 10,
**dadurch gekennzeichnet, daß** mindestens eine Nut (94) in der Oberseite der Scheibe (93) ausgebildet ist.

12. Vorrichtung nach einem der Ansprüche 9 bis 11,
**dadurch gekennzeichnet, daß** eine Reinigungsvorrichtung (76) zum Reinigen eines oder mehrerer Beine des Tieres unter der Scheibe (93) angeordnet ist.

13. Vorrichtung nach Anspruch 12,
**dadurch gekennzeichnet, daß** die Reinigungsvorrichtung (76) zur Drehung um eine aufwärts gerichtete Achse (75) motorisch angetrieben ist.

14. Vorrichtung nach Anspruch 13,
**dadurch gekennzeichnet, daß** die Reinigungsvorrichtung Textilscheiben (81) umfaßt, die an einer aufwärts gerichteten Achse (75) angeordnet sind.

15. Vorrichtung nach Anspruch 13,
**dadurch gekennzeichnet, daß** die Reinigungsvorrichtung (76) Borsten umfaßt, die in radialer Richtung an der aufwärts gerichteten Achse (75) angeordnet sind.

16. Vorrichtung nach einem der vorhergehenden Ansprüche,
**dadurch gekennzeichnet, daß** die Massagevorrichtung (76) eine Vorrichtung umfaßt, mittels der der Massagevorrichtung (12) eine Reinigungs- und/oder Desinfektionsflüssigkeit zugeführt werden kann.

17. Vorrichtung nach Anspruch 16,
**dadurch gekennzeichnet, daß** die Vorrichtung eine Zuführleitung (90) umfaßt, die mit der Unterseite der Massagevorrichtung (12) verbunden ist.

18. Vorrichtung nach Anspruch 16 oder 17,
**dadurch gekennzeichnet, daß** die Vorrichtung eine Sprühdüse (86) umfaßt.

19. Vorrichtung nach einem der vorhergehenden Ansprüche,
**dadurch gekennzeichnet, daß** sie zwei Boxen (2, 3) sowie eine Reinigungs- und/oder Massagevorrichtung umfaßt, die um eine aufwärts gerichtete Achse (75) drehbar und geeignet ist, in jeder Box des Melkstandes zu arbeiten.

20. Vorrichtung nach Anspruch 19,
**dadurch gekennzeichnet, daß** die beiden Boxen (2, 3) nebeneinander in einem bestimmten Abstand voneinander angeordnet sind, wobei in dem Zwischenraum (4) zwischen den beiden Boxen (2, 3) ein in Längsrichtung des Melkstandes (1) bewegbares Gestell (40) angeordnet ist, wobei an dem Gestell die Reinigungs- und/oder Massagevorrichtung angebracht ist.

21. Vorrichtung nach Anspruch 19 oder 20,
**dadurch gekennzeichnet, daß** sie einen mit Zitzenbechern (35) versehenen ersten Roboterarm (34) und einen mit einer Reinigungs- und/oder Massagevorrichtung (12) versehenen zweiten Roboterarm (57) umfaßt, wobei der erste und der zweite Roboterarm von links nach rechts abwechselnd in eine erste Box (2) und eine zweite Box (3) bewegbar sind.

22. Vorrichtung nach Anspruch 21,
**dadurch gekennzeichnet, daß** der erste Roboterarm (34) mit einem Gestell (16) verbunden ist, das in Längsrichtung des Melkstandes (1) bewegbar ist.

23. Vorrichtung nach einem der vorhergehenden Ansprüche,
**dadurch gekennzeichnet, daß** sie eine einzige Behandlungsvorrichtung umfaßt, mittels der die vier Zitzen nacheinander behandelt werden können.

24. Vorrichtung nach Anspruch 23,
**dadurch gekennzeichnet, daß** die Behandlungsvorrichtung einen Zitzenbecher (108) umfaßt.

25. Vorrichtung nach Anspruch 24,
**dadurch gekennzeichnet, daß** der Zitzenbecher (108) an seinem oberen Ende mit einem elastischen Flansch (109) versehen ist, der im Betrieb zumindest teilweise mit der Zitze und auch mit einem Teil der Unterseite des Euters in Kontakt steht.

26. Vorrichtung nach Anspruch 25,
**dadurch gekennzeichnet, daß** der elastische Flansch (109) mit radial angeordneten Kanälen (120) versehen ist.

27. Vorrichtung nach Anspruch 26,
**dadurch gekennzeichnet, daß** die Kanäle (120) eine Anordnung zur Übertragung von Ultrakurzwellen zur Anregung der Durchblutung umfassen.

28. Vorrichtung nach einem der vorhergehenden Ansprüche,
**dadurch gekennzeichnet, daß** sie eine separate Vormelkvorrichtung (107) umfaßt, die derart arbeitet, daß die mittels der Vormelkvorrichtung gewonnene Milch nicht mit Milch für den menschlichen Verzehr in Kontakt kommt.

## Revendications

1. Installation de traite automatique d'animaux, tels que des vaches, avec une salle de traite (1) et un robot de traite (11) et comprenant un dispositif de massage (12, 107) permettant de masser la mamelle d'un animal, **caractérisée en ce que** le dispositif de massage (12, 107) peut être déplacé verticalement pour masser la mamelle au moyen d'un mouvement ascendant et descendant du dispositif de massage (12, 107).

2. Installation selon la revendication 1, **caractérisée en ce que** le dispositif de massage (12, 107) est prévu sur un bras du robot (34, 104).

3. Installation selon la revendication 2, **caractérisée en ce que** le bras du robot (34, 104) est constitué d'une première partie (105) et d'une seconde partie (106), moyennant quoi, le dispositif permettant d'obtenir le premier lait (12, 107) est monté sur la seconde partie (106).

4. Installation selon la revendication 3, **caractérisée en ce que** la seconde partie (106) du bras du robot (34, 104) est constituée d'un engrenage en parallélogramme/articulé (123).

5. Installation selon la revendication 4, **caractérisée en ce que** monté sur un premier bras (124) de l'engrenage en parallélogramme/articulé (123), un moteur (130) entraîne un excentrique (129) qui est monté dans un élément de liaison (131) de manière à pouvoir pivoter, dont l'autre extrémité est reliée sur un second bras (125) de l'engrenage en parallélogramme/articulé (123) de manière à pouvoir pivoter.

6. Installation selon l'une quelconque des revendications 3 à 5, **caractérisée en ce que** la première partie (105) aussi bien que la seconde partie (106) du bras du robot (104) est mise en oeuvre en tant qu'engrenage en parallélogramme/articulé.

7. Installation selon la revendication 3, **caractérisée en ce que** sur la première partie du bras du robot (34, 104), un moteur (73) entraîne un excentrique (69) qui est monté dans un élément de liaison (70) de manière à pouvoir pivoter, dont l'autre extrémité est reliée à la seconde partie du bras du robot (34) de manière à pouvoir pivoter.

8. Installation selon l'une quelconque des revendications précédentes, **caractérisée en ce que** le dispositif de massage (107) comprend un gobelet-trayeur (108).

9. Installation selon l'une quelconque des revendications 1 à 7, **caractérisée en ce que** le dispositif de massage (12) comprend un disque (93) constitué d'un matériau souple.

10. Installation selon la revendication 9, **caractérisée en ce que** le disque souple (93) est entraîné par moteur pour tourner autour d'un arbre orienté vers le haut (75).

11. Installation selon la revendication 9 ou 10, **caractérisée en ce qu'**au moins une rainure (94) est proposée sur le côté supérieur du disque (93).

12. Installation selon l'une quelconque des revendications 9 à 11, **caractérisée en ce que** le dispositif de nettoyage (76) permettant de nettoyer une ou plusieurs pattes de l'animal est disposé sous le disque (93).

13. Installation selon la revendication 12, **caractérisée en ce que** le dispositif de nettoyage (76) est entraîné par moteur pour tourner autour d'un axe orienté vers le haut (75).

14. Installation selon la revendication 13, **caractérisée en ce que** le dispositif de nettoyage comprend des disques textiles (81) proposés sur l'arbre orienté vers le haut (75).

15. Installation selon la revendication 13, **caractérisée en ce que** le dispositif de nettoyage (76) comprend des soies disposées radialement sur l'arbre orienté vers le haut (75).

16. Installation selon l'une quelconque des revendications précédentes, **caractérisée en ce que** le dispositif de massage (76) comprend des moyens, avec l'aide desquels un fluide de nettoyage et/ou de désinfection peut être fourni au dispositif de massage (12).

17. Installation selon la revendication 16, **caractérisée en ce que** les moyens comprennent une conduite d'alimentation (90) reliée au côté inférieur du dispositif de massage (12).

18. Installation selon la revendication 16 ou 17, **caractérisée en ce que** les moyens comprennent une buse, d'atomisation (86).

19. Installation selon l'une quelconque des revendications précédentes, **caractérisée en ce qu'**elle comprend deux compartiments (2, 3) aussi bien qu'un dispositif de nettoyage et/ou de massage qui peut tourner autour d'un arbre orienté vers le haut (75) et qui est capable de fonctionner dans l'un ou l'autre compartiment de la salle de traite.

20. Installation selon la revendication 19, **caractérisée en ce que** deux compartiments (2, 3) sont situés côte à côte à une certaine distance l'un de l'autre, tandis que dans l'intervalle (4) entre les deux compartiments (2, 3), un châssis (40) mobile dans la direction longitudinale de la salle de traite (1) est placé, châssis auquel le dispositif de nettoyage et/ou de massage est relié.

21. Installation selon la revendication 19 ou 20, **caractérisée en ce qu'**elle comprend un premier bras du robot (34) équipé de gobelets-trayeurs (35) et un second bras du robot (57) équipé d'un dispositif de nettoyage et/ou de massage (12), le premier et le second bras du robot étant mobiles, de gauche à droite, de manière alternée dans un premier compartiment (2) et dans un second compartiment (3).

22. Installation selon la revendication 21, **caractérisée en ce que** le premier bras du robot (34) est relié à un châssis (16) mobile dans la direction longitudinale de la salle de traite (1).

23. Installation selon l'une quelconque des revendications précédentes, **caractérisée en ce qu'**elle comprend un ustensile de manipulation, au moyen duquel les quatre trayons peuvent être traités successivement.

24. Installation selon la revendication 23, **caractérisée en ce que** l'ustensile de manipulation comprend un gobelet-trayeur (108).

25. Installation selon la revendication 24, **caractérisée en ce que**, sur son extrémité supérieure, le gobelet-trayeur (108) est équipé d'une bride flexible (109) qui, pendant le fonctionnement, est au moins en partie en contact avec le trayon et également avec une partie de la sous-face de la mamelle.

26. Installation selon la revendication 25, **caractérisée en ce que** la bride flexible (109) est équipée de canaux (120) disposés radialement.

27. Installation selon la revendication 26, **caractérisée en ce que** les canaux (120) comprennent un dispositif permettant la transmission d'ondes métriques pour stimuler le flux sanguin.

28. Installation selon l'une quelconque des revendications précédentes, **caractérisée en ce qu'**elle comprend un dispositif permettant d'obtenir le premier lait (107), qui fonctionne de façon à ce que le lait obtenu au moyen du dispositif permettant d'obtenir le premier lait n'entre pas en contact avec le lait obtenu destiné à la consommation humaine.
